# EUROPÄISCHE PATENTSCHRIFT

(11) **EP 4 201 659 B1**
(45) Veröffentlichungstag und Bekanntmachung des Hinweises auf die Patenterteilung: **12.02.2025**
(21) Anmeldenummer: 22212721.9
(22) Anmeldetag: 12.12.2022
(51) Int. Cl.: B29D 30/08, B29D 30/72, B60C 1/00, B60C 13/00

(54) **VERFAHREN ZUR HERSTELLUNG VON MEHRKOMPONENTIGEN SEITENWÄNDEN BEI DER HERSTELLUNG VON FAHRZEUGREIFEN**
METHOD FOR PRODUCING MULTI-COMPONENT SIDE WALLS IN THE PRODUCTION OF VEHICLE TYRES
PROCÉDÉ DE FABRICATION DE FLANCS À COMPOSANTS MULTIPLES LORS DE LA FABRICATION DE PNEUS DE VÉHICULE

(30) Priorität: 21.12.2021 DE 102021214791
(43) Veröffentlichungstag der Anmeldung: 28.06.2023
(73) Patentinhaber: Continental Reifen Deutschland GmbH, 30175 Hannover (DE)
(72) Erfinder: Mauruschat, Rainer, 30165 Hannover (DE)
(74) Vertreter: Continental Corporation

(56) Entgegenhaltungen:
- KR-B1- 101 459 905
- KR-U- 20100 000 085
- US-A1- 2011 094 648

## Beschreibung

Die Erfindung betrifft ein Verfahren zur Herstellung einer mehrkomponentigen Seitenwand für die Verwendung in Fahrzeugreifen und ein hierauf aufbauendes Verfahren zur Herstellung eines Fahrzeugreifens. Offenbart wird zudem eine spannungsfreie mehrkomponentigen Seitenwand.

Bei der Fertigung moderner Fahrzeugluftreifen kommt neben den üblichen Bestandteilen, wie dem Laufstreifen und der Reifenkarkasse, insbesondere auch den Seitenwänden eine wesentliche Bedeutung bei, da diese die Flankenbereiche der Fahrzeugluftreifen ausbilden und die mechanischen Eigenschaften der resultierenden Fahrzeugluftreifen maßgeblich mitbeeinflussen.

Diese Seitenwände werden dabei im Herstellungsprozess regelmäßig als separate Komponenten gefertigt und erst im Zuge des Reifenaufbauverfahrens mit den weiteren Komponenten des Reifenrohlings kombiniert. Beispielhafte Verfahren sind hierbei solche, bei denen die Seitenwände auf einer Reifenaufbautrommel auf die Reifenkarkasse aufgelegt und anschließend gemeinsam mit der Reifenkarkasse mit einem Laufstreifen verbunden werden, sodass die Seitenwand mit ihrem oberen Ende unterhalb des Laufstreifens bzw. unterhalb etwaiger Gürtellagen endet (sogenanntes "sidewall under belt" oder "sidewall to belt"). Als besonders relevante Alternative zu diesem Verfahren kann eine Ausgestaltung gesehen werden, bei der die Seitenwände mittels einer Hochschlagvorrichtung durch den Einsatz von sogenannten Bombierbalgen auf die Flanken einer Reifenkarkasse hochgeschlagen werden. Diese aufblasbaren Bombierbalge drücken die Seitenwände dabei infolge ihrer Expansion gegen die Flanke der Fahrzeugluftreifen, wodurch die Enden der hochgeschlagenen Seitenwände teilweise auch über das ausgebrachte Gürtel-Laufstreifen-Paket geschlagen werden können (sogenanntes "sidewall over tread").

Unabhängig von dem eingesetzten Verfahren müssen die anzubringenden Seitenwände dabei akkurat ausgerichtet und während teilweise komplexer Applikationsschritte präzise geführt werden können, wobei Materialfehler, wie sie beispielsweise durch eine verrutschte Seitenwand oder eine unzureichende Ausrichtung der Seitenwände auf der Reifenkarkasse bedingt sein können, leicht den gesamt resultierenden Fahrzeugluftreifen unbrauchbar machen können.

**In** den vergangenen Jahren ist die Komplexität der in der Reifenfertigung eingesetzten Seitenwände teilweise stark gestiegen. Dabei werden heutzutage statt einzelner Gummiwandung häufig komplexe mehrkomponentige Seitenwände eingesetzt. Diese Seitenwandbauteile bestehen regelmäßig aus drei oder mehr verschiedenen vulkanisierbaren Kautschukmischungen, deren physikalisch-chemische Eigenschaften sich voneinander unterscheiden. Solche mehrkomponentigen Seitenwände werden im Stand der Technik zumeist durch Co-Extrusion der verschiedenen vulkanisierbaren Kautschukmischungen durch eine Extrusionsschablone erzeugt, sodass die verschiedenen vulkanisierbaren Kautschukmischungen miteinander durch eine stoffschlüssige Verbindung verbunden sind.

Eine wesentliche Materialkenngröße, die sich zwischen den verschiedenen vulkanisierbaren Kautschukmischungen regelmäßig unterscheidet ist dabei die Steifigkeit der vulkanisierbaren Kautschukmischungen. Insbesondere der Teilabschnitt mehrkomponentiger Seitenwände, der im späteren Fahrzeugluftreifen im Bereich der Reifenwulst angeordnet und teilweise um diese herumgeschlagen wird (teilweise auch als "rim strip" bezeichnet) weist häufig eine höhere Steifigkeit auf als die Komponente, welche im späteren Fahrzeugluftreifen in Richtung des Laufstreifens weist.

Ganz besonders markante Unterschiede in der Steifigkeit der vulkanisierbaren Kautschukmischungen ergeben sich insbesondere dann, wenn zudem ein sogenanntes äußeres Apexelement (auch als "outer apex" bezeichnet) eingesetzt wird. In diesen äußeren Apexelementen wird häufig eine vulkanisierbare Kautschukmischung eingesetzt, die der in der Kernfahne eingesetzten vulkanisierbaren Kautschukmischung ähnelt und die entsprechend über eine besonders hohe Steifigkeit und daher einen besonders großen E-Modul verfügt.

Bei den aus dem Stand der Technik bekannten Verfahren zur Herstellung einer entsprechenden mehrkomponentigen Seitenwand kommt es, bedingt durch die stoffschlüssige Verbindung zwischen den drei Komponenten, welche unmittelbar bei der Co-Extrusion gebildet wird, regelmäßig zu Spannungen im Material. Diese werden durch die unterschiedlichen mechanischen Eigenschaften der miteinander verbundenen Materialien, insbesondere deren unterschiedlicher Steifigkeit, sowie das unterschiedliche Schrumpfverhalten verursacht, welches für die verschiedenen Komponenten beim Abkühlen nach der Extrusion eine unterschiedliche Volumenänderung bedingt. Dies hat zur Folge, dass mehrkomponentige Seitenwände, insbesondere solche, die einen sogenannten "rim strip" und/oder ein äußeres Apexelement umfassen, nach der Co-Extrusion häufig starke Spannungen im Material aufweisen.

Diese Spannungen führen bei co-extrudierten mehrkomponentigen Seitenwänden regelmäßig zu einem sogenannten Bananen-Effekt (auch als "banana effect" bezeichnet), so dass entsprechende mehrkomponentige Seitenwände häufig eine ausgeprägte Krümmung aufweisen, häufig in Richtung der Komponenten, die die größte Volumenkontraktion erfahren. Darüber hinaus zeigen entsprechende coextrudierte mehrkomponentige Seitenwände wegen der internen Spannungen eine ausgeprägte Tendenz für Verdrehungen und sind dadurch nur schwer flach auf ebenen Flächen zu platzieren. Diese Eigenschaft co-extrudierter mehrkomponentiger Seitenwände macht den Einsatz in typischen Reifenaufbauverfahren selbst dann anspruchsvoll, wenn diese von erfahrenen Arbeitskräften durchgeführt bzw. betreut werden, wobei insbesondere eine korrekte Anordnung auf dem Schulterring einer typischen Hochschlagvorrichtung durch die schlechte Formanpassung und die wirkenden Rückstellkräfte erschwert sein kann. Noch nachteiliger wirken sich die Eigenschaften der aus dem Stand der Technik bekannten mehrkomponentigen Seitenwände jedoch dann aus, wenn das Reifenaufbauverfahren automatisiert werden soll. Die automatische Führung und Anbringung entsprechender co-extrudierter mehrkomponentiger Seitenwände ist nämlich regelmäßig besonders herausfordernd und in vielen Fällen nicht oder nur schwer mit üblichen Vorrichtungen zu automatisieren, da diese nicht oder nur schlecht mit den auftretenden Verformungen umgehen können.

Zu diesem grundsätzlichen Nachteil tritt hinzu, dass auch die Co-Extrusion solcher mehrkomponentiger Seitenwände, welche drei oder mehr vulkanisierbare Kautschukmischungen umfassen, insbesondere wegen der vergleichsweise hohen Komplexität der für die Extrusion benötigten Extrusionsschablonen, regelmäßig als nachteilig empfunden wird.

Die Patentschrift KR 2010 0000085 U offenbart ein Mehrkomponenten-Seitenwand-Halbzeug zur Herstellung eines Reifens.

Es war vor diesem Hintergrund die primäre Aufgabe der vorliegenden Erfindung, die aus dem Stand der Technik bekannten Nachteile auszuräumen oder zumindest zu verringern.

Insoweit war es insbesondere die Aufgabe der vorliegenden Erfindung, ein Verfahren anzugeben, mit dem mehrkomponentige Seitenwände für die Verwendung in Fahrzeugreifen hergestellt werden können, die über möglichst wenig Spannungen in der mehrkomponentigen Seitenwand verfügen, insbesondere zwischen den verschiedenen vulkanisierbaren Kautschukmischungen, und infolgedessen einen reduzierten Bananen-Effekt zeigen.

Vor diesem Hintergrund war es eine Aufgabe der vorliegenden Erfindung, dass mit dem anzugebenden Verfahren mehrkomponentige Seitenwände herstellbar sein sollten, die sich besonders leicht und zuverlässig in typischen Reifenaufbauverfahren verarbeiten lassen, wobei insbesondere eine saubere Anpassung an eine ebene Unterlage sowie eine möglichst spannungsfreie Anordnung auf der Ausformschulter einer Hochschlagvorrichtung möglich sein sollte.

Mit dem anzugebenden Verfahren sollten dabei wünschenswerterweise mehrkomponentige Seitenwände herstellbar sein, die so wenig zu Verbiegungen und Verdrehungen neigen, dass sie auch in automatisieren Reifenaufbauverfahren zuverlässig eingesetzt werden können.

Es war eine Aufgabe der vorliegenden Erfindung, dass das anzugebende Verfahren idealerweise unter Verwendung solcher Materialien und Gerätschaften durchführbar sein sollte, die bereits heute in der Reifenindustrie zum Einsatz kommen. Insoweit war es eine ergänzende Aufgabe der vorliegenden Erfindung, dass das anzugebende Verfahren für eine breite Palette an möglichen Materialien und die gängigen Aufbauten von mehrkomponentigen Seitenwänden, insbesondere mehrkomponentigen Seitenwänden mit einem äußeren Apexelement, einsetzbar sein sollte. Dabei war es wünschenswert, dass das anzugebende Verfahren im Vergleich mit dem aus dem Stand der Technik bekannten Verfahren besonders zeit- und kosteneffizient durchführbar sein sollte.

Es war eine ergänzende Aufgabe der vorliegenden Erfindung, dass die Komplexität der für das Herstellungsverfahren benötigten Extrusionsschablonen reduziert werden können sollte.

Aufbauend auf den vorstehend beschriebenen Aufgaben sollte zudem ein Verfahren zur Herstellung von Fahrzeugreifen angegeben werden, welches auch dann die reproduzierbare und zuverlässige Fertigung von Fahrzeugreifen mit komplexen mehrkomponentigen Seitenwänden und damit die Herstellung hochleistungsfähiger Fahrzeugluftreifen erlaubt, wenn die Seitenwände zumindest teilweise in einem automatisierten Verfahren aufgebracht werden.

Der Erfinder der vorliegenden Erfindung hat nunmehr erkannt, dass die vorstehend beschriebenen Aufgaben überraschenderweise gelöst werden können, wenn bei der Herstellung von mehrkomponentigen Seitenwänden mit drei oder mehr vulkanisierbaren Kautschukmischungen von dem aus dem Stand der Technik bekannten Verfahren der gleichzeitigen Co-Extrusion sämtlicher dieser vulkanisierbaren Kautschukmischungen abgewichen wird und hingegen nur ein Teil der vulkanisierbaren Kautschukmischungen durch Co-Extrusion zu einem Seitenwandgrundrohling ausgeformt wird, welcher über eine Aufnahmeausnehmung verfügt, in die anschließend das die dritte vulkanisierbare Kautschukmischung enthaltene Einsatzelements nachträglich eingefügt wird, wie es in den Ansprüchen beschrieben ist.

Durch die nachträgliche Anordnung eines Einsatzelements in den einfacher aufgebauten Seitenwandgrundrohling lassen sich, selbst wenn das Einsatzelement aus einem besonders steifen Material ausgebildet ist, überraschenderweise mehrkomponentige Seitenwände erhalten, die über sehr geringe innere Spannungen verfügen und vorteilhafterweise einen reduzierten Bananen-Effekt zeigen, wobei durch die Wahl einer geeigneten stoff- und/oder formschlüssigen Verbindung des Einsatzelements mit dem Seitenwandgrundrohling trotzdem haltbare und leistungsfähige mehrkomponentige Seitenwände erhalten werden, die zuverlässig in üblichen Reifenaufbauverfahren eingesetzt werden können, selbst wenn diese in einem hohen Maße automatisiert werden.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Die Erfindung betrifft ein Verfahren zur Herstellung einer mehrkomponentigen Seitenwand für die Verwendung in Fahrzeugreifen, umfassend die Verfahrensschritte:
a) Herstellen oder Bereitstellen eines mehrkomponentigen Seitenwandgrundrohlings, wobei der Seitenwandgrundrohling einen ersten Teilbereich, umfassend eine erste vulkanisierbare Kautschukmischung, und einen zweiten Teilbereich, umfassend eine zweite vulkanisierbare Kautschukmischung, umfasst, wobei der Seitenwandgrundrohling zumindest eine Aufnahmeausnehmung aufweist,
b) Herstellen oder Bereitstellen eines Einsatzelements, umfassend eine dritte vulkanisierbare Kautschukmischung, und
c) Anordnen des Einsatzelements in der Aufnahmeausnehmung des Seitenwandgrundrohlings zur Herstellung der mehrkomponentigen Seitenwand.

Im erfindungsgemäßen Verfahren wird zunächst ein mehrkomponentiger Seitenwandgrundrohling bereitgestellt. Dieser umfasst zwei oder mehr Teilbereiche, wobei es mit Blick auf die praxisrelevantesten Ausführungsformen und möglichst geringe Spannungen in der mehrkomponentigen Seitenwand bevorzugt ist, wenn der Seitenwandgrundrohling exakt aus diesen zwei Teilbereichen besteht. Bevorzugt ist entsprechend ein erfindungsgemäßes Verfahren, wobei der Seitenwandgrundrohling aus dem ersten Teilbereich und dem zweiten Teilbereich besteht.

In Übereinstimmung mit dem fachmännischen Verständnis können die Teilbereiche neben der vulkanisierbaren Kautschukmischung auch weitere Bestandteile umfassen. Beispielsweise ist es denkbar, dass einzelne der Teilbereiche für spezialisierte Anwendungen Festigkeitsträger oder ähnliches umfassen. Der Fachmann versteht jedoch, dass es für die weit überwiegende Zahl der Fälle bevorzugt ist, wenn die entsprechenden Teilbereiche weitgehend bzw. im Wesentlichen vollständig aus den jeweiligen vulkanisierbaren Kautschukmischungen bestehen. Bevorzugt ist deshalb ein erfindungsgemäßes Verfahren, wobei der Massenanteil der ersten vulkanisierbaren Kautschukmischung im ersten Teilbereich 80 % oder mehr, bevorzugt 90 % oder mehr, besonders bevorzugt 95 % oder mehr, ganz besonders bevorzugt 98 % oder mehr, insbesondere im Wesentlichen 100 %, beträgt, bezogen auf die Masse des ersten Teilbereichs, und/oder wobei der Massenanteil der zweiten vulkanisierbaren Kautschukmischung im zweiten Teilbereich 80 % oder mehr, bevorzugt 90 % oder mehr, besonders bevorzugt 95 % oder mehr, ganz besonders bevorzugt 98 % oder mehr, insbesondere im Wesentlichen 100 %, beträgt, bezogen auf die Masse des zweiten Teilbereichs.

Die im erfindungsgemäßen Verfahren eingesetzten mehrkomponentigen Seitenwandgrundrohlinge werden bevorzugt im Rahmen des erfindungsgemäßen Verfahrens hergestellt, was vorteilhafterweise mittels Co-Extrusion und damit unter Verwendung eines etablierten Herstellungsverfahrens erfolgen kann, für das der Fachmann die benötigten Gerätschaften regelmäßig bereits zur Verfügung hat. Dadurch, dass lediglich zwei vulkanisierbare Kautschukmischungen co-extrudiert werden müssen, lässt sich der Seitenwandgrundrohling jedoch im Vergleich zu der mehrkomponentigen Seitenwand deutlich leichter herstellen, wobei der apparative Aufwand insbesondere mit Blick auf die benötigte Extrusionsschablone und die Zahl der Extruder erheblich reduziert werden kann. Bevorzugt ist für die meisten Fälle somit ein erfindungsgemäßes Verfahren, wobei der mehrkomponentige Seitenwandgrundrohling hergestellt wird, wobei das Herstellen durch Co-Extrusion der ersten vulkanisierbaren Kautschukmischung und der zweiten vulkanisierbaren Kautschukmischung erfolgt. Bevorzugt ist folglich auch ein erfindungsgemäßes Verfahren, wobei der erste Teilbereich und der zweite Teilbereich im Seitenwandgrundrohling verbunden sind, bevorzugt durch eine zumindest teilweise stoffschlüssige Verbindung, wobei die stoffschlüssige Verbindung besonders bevorzugt durch Co-Extrusion der ersten vulkanisierbaren Kautschukmischung und der zweiten vulkanisierbaren Kautschukmischung erzeugt oder befördert wird.

Dem Erfinder der vorliegenden Erfindung ist es gelungen, für die Ausgestaltung der Teilbereiche im Seitenwandgrundrohling geeignete Volumenanteile zu identifizieren, mit denen sich leistungsfähige mehrkomponentige Seitenwände erhalten lassen. Gleichzeitig bedeutet der Umstand, dass in entsprechenden Seitenwandgrundrohlingen die beiden Teilbereiche relativ große Anteile haben jedoch auch, dass ein Seitenwandgrundrohling erhalten wird, dessen mechanische Eigenschaften relativ heterogen sind und der entsprechend bei Fertigung im herkömmlichen Verfahren besonders anfällig für das Auftreten von unerwünschten Spannungen wäre, sodass sich die Vorteile des erfindungsgemäßen Verfahrens besonders stark zeigen. Bevorzugt ist somit ein erfindungsgemäßes Verfahren, wobei der Volumenanteil des ersten Teilbereichs und/oder des zweiten Teilbereichs, bevorzugt beider Teilbereiche, 10 % oder mehr, bevorzugt 20 % oder mehr, besonders bevorzugt 30 % oder mehr, ganz besonders bevorzugt 40 % oder mehr, beträgt, bezogen auf das Volumen des Seitenwandgrundrohlings.

Aus einem ähnlichen Grund ist es bevorzugt, das erfindungsgemäße Verfahren für die Herstellung solcher Seitenwandgrundrohlinge einzusetzen, in denen die vulkanisierbaren Kautschukmischungen einen gewissen Unterschied im E-Modul und damit in der Steifigkeit zeigen. Bei mehrkomponentigen Seitenwänden, die entsprechende vulkanisierbare Kautschukmischungen umfassen, zeigt sich im Stand der Technik regelmäßig eine besonders große Neigung zu unerwünschten Krümmungen, insbesondere wenn der Anteil der steiferen "rim strip"-Komponente relativ groß ist. Auch für solche Seitenwandgrundrohlinge ist der Einsatz des erfindungsgemäßen Verfahrens besonders vorteilhaft, da die vorstehend beschriebenen Probleme im Stand der Technik besonders ausgeprägt sind. Bevorzugt ist vor diesem Hintergrund ein erfindungsgemäßes Verfahren, wobei die erste vulkanisierbare Kautschukmischung und die zweite vulkanisierbare Kautschukmischung einen unterschiedlichen E-Modul aufweisen, wobei sich der E-Modul bevorzugt um 2 MPa oder mehr, besonders bevorzugt um 4 MPa oder mehr, ganz besonders bevorzugt um 6 MPa oder mehr, unterscheidet. Im Rahmen der vorliegenden Erfindung bezeichnet der Ausdruck E-Modul den mittleren dynamischen Speichermodul E', welcher für Gummiwerkstoffe aus einer dynamisch-mechanischen Messung bei 55 °C gemäß DIN 53513:1990-03 ermittelt wird, wobei der mittlere dynamische Speichermodul E' der Mittelwert aus zwei Messungen bei 0,15 % Dehnung und 8 % Dehnung ist.

Erfindungsgemäß weist der im Verfahren einzusetzende Seitenwandgrundrohling zumindest eine Aufnahmeausnehmung auf. Bei dieser Aufnahmeausnehmung handelt es sich um eine Vertiefung im Seitenwandgrundrohling, die beispielsweise mit einem materialabtragenden Verfahren erzeugt werden kann. Ganz besonders bevorzugt ist es jedoch, wenn die Aufnahmeausnehmung beispielsweise im Rahmen der Co-Extrusion der vulkanisierbaren Kautschukmischungen, d.h. unmittelbar bei der Herstellung des Seitenwandgrundrohlings, erzeugt wird. Im erfindungsgemäßen Verfahren ist die Aufnahmeausnehmung dafür vorgesehen, die dritte Komponente der mehrkomponentigen Seitenwand aufzunehmen, sodass durch das Anordnen eines Einsatzelements, welches sozusagen die dritte Komponente der späteren mehrkomponentigen Seitenwand darstellt, in dem Seitenwandgrundrohling die mehrkomponentige Seitenwand hergestellt wird.

Prinzipiell kann die Aufnahmeausnehmung an einer beliebigen Stelle des Seitenwandgrundrohlings angeordnet sein und beispielsweise vollständig in einem der Teilbereiche liegen. Für die Praxis relevant sind jedoch häufig solche mehrkomponentigen Seitenwände, in denen die drei vulkanisierbaren Kautschukmischungen miteinander in Kontakt stehen, sodass es regelmäßig bevorzugt ist, wenn die Aufnahmeausnehmung zumindest teilweise in jeden der Teilbereiche hineinragt. Dies ist mit Blick auf das erfindungsgemäße Verfahren auch deshalb bevorzugt, weil entsprechende mehrkomponentige Seitenwände mit drei verschiedenen Kontaktflächen regelmäßig besonders anfällig für das Auftreten von Spannungen im Material sind, sodass sich die Vorteile des erfindungsgemäßen Verfahrens besonders deutlich zeigen. In synergistischer Weise ergibt sich bei dieser Anordnung der Aufnahmeausnehmung noch ein weiterer Vorteil, da die Kontaktfläche zwischen dem ersten Teilbereich und dem zweiten Teilbereich durch die in den Seitenwandgrundrohling hineinreichende Aufnahmeausnehmung minimiert wird. Durch die reduzierte Kontaktfläche zwischen den beiden vulkanisierbaren Kautschukmischungen können Spannungen im Material, welche sich beispielsweise durch einen unterschiedlichen Schrumpf der Materialien nach der Extrusion ergeben können, reduziert werden. Besonders bevorzugt ist entsprechend ein erfindungsgemäßes Verfahren, wobei die Aufnahmeausnehmung teilweise im ersten Teilbereich und teilweise im zweiten Teilbereich liegt, und/oder wobei die Aufnahmeausnehmung bevorzugt im Zentralbereich des Seitenwandgrundrohlings angeordnet ist, wobei sich der Zentralbereich quer zur Längsrichtung des Seitenwandgrundrohlings im Bereich zwischen 20 und 80 %, bevorzugt 30 bis 70 %, besonders bevorzugt 40 bis 60 %, der Gesamtbreite erstreckt.

Dem Erfinder ist es insoweit gelungen, besonders geeignete Abmessungen für die Aufnahmeausnehmung zu identifizieren, wobei insbesondere die relative Tiefe der Aufnahmeausnehmung in Bezug auf die maximale Dicke des Seitenwandgrundrohlings ein Faktor ist, welcher zum Erhalt möglichst spannungsfreier mehrkomponentiger Seitenwände gezielt eingestellt und auf die verwendeten vulkanisierbaren Kautschukmischungen abgestimmt werden kann. Bevorzugt ist nämlich ein erfindungsgemäßes Verfahren, wobei die Aufnahmeausnehmung an der Öffnung quer zur Längsrichtung des Seitenwandgrundrohlings eine Breite im Bereich von 0,3*b bis 0,7*b, bevorzugt im Bereich von 0,4*b bis 0,6*b, besonders bevorzugt im Bereich von 0,45*b bis 0,55*b, aufweist, wobei b die Breite des Seitenwandgrundrohlings quer zur Längsrichtung ist, und/oder wobei die Aufnahmeausnehmung eine maximale Tiefe im Bereich von 0,3*d bis 0,7*d, bevorzugt im Bereich von 0,4*d bis 0,6*d, besonders bevorzugt im Bereich von 0,45*d bis 0,55*d, aufweist, wobei d die maximale Dicke des Seitenwandgrundrohlings ist.

Die dritte Komponente der mehrkomponentigen Seitenwand wird separat zugeführt, wobei das hierfür verwendete Element vorliegend funktional als Einsatzelement bezeichnet wird. Dieses Einsatzelement kann vorteilhafterweise ebenfalls hergestellt oder bereitgestellt werden, wobei auch diese Komponente bevorzugt durch Extrusion der entsprechenden vulkanisierbaren Kautschukmischung hergestellt wird. In vorteilhafterweise kann hierfür ein besonders einfacher Extrusionsprozess und eine sehr einfach strukturierte Extrusionsschablone verwendet werden. Bevorzugt ist ein somit erfindungsgemäßes Verfahren, wobei das Einsatzelement hergestellt wird, wobei das Herstellen durch Extrusion der dritten vulkanisierbaren Kautschukmischung erfolgt.

In Übereinstimmung mit den vorstehenden Ausführungen ist es für den Fachmann verständlich, dass auch für das Einsatzelement Ausführungsformen bevorzugt sind, die weit überwiegend aus der entsprechenden vulkanisierbaren Kautschukmischung bestehen. Bevorzugt ist folglich ein erfindungsgemäßes Verfahren, wobei der Massenanteil der dritten vulkanisierbaren Kautschukmischung im Einsatzelement 80 % oder mehr, bevorzugt 90 % oder mehr, besonders bevorzugt 95 % oder mehr, ganz besonders bevorzugt 98 % oder mehr, insbesondere im Wesentlichen 100 %, beträgt, bezogen auf die Masse des Einsatzelements.

Es kann als Vorteil des erfindungsgemäßen Verfahrens gesehen werden, dass dieses hinsichtlich der Größe der eingebrachten Einsatzelemente sehr flexibel ist. Nach Einschätzung des Erfinders kann jedoch ein Bereich für den Volumenanteil des Einsatzelements identifiziert werden, mit dem zuverlässig leistungsfähige mehrkomponentige Seitenwände erhalten werden können, insbesondere wenn das eingebrachte Einsatzelement als äußeres Apexelement fungieren soll. Bevorzugt ist ein erfindungsgemäßes Verfahren, wobei der Volumenanteil des Einsatzelements im Bereich von 10 % bis 50 %, bevorzugt im Bereich von 20 % bis 40 %, besonders bevorzugt im Bereich von 25 % bis 35 %, liegt, bezogen auf das Volumen der mehrkomponentigen Seitenwand.

Wie vorstehend erläutert, zeigen sich die Nachteile des Verfahrens des Standes der Technik besonders ausgeprägt, wenn die mehrkomponentige Seitenwand eine besonders steife vulkanisierbare Kautschukmischung umfasst, insbesondere eine vulkanisierbare Kautschukmischung, wie sie in äußere Apexelementen zum Einsatz kommt. Mit dem erfindungsgemäßen Verfahren ist es hingegen möglich, auch solche mehrkomponentigen Seitenwände mit besonders steifen vulkanisierbaren Kautschukmischungen herzustellen und gleichzeitig die Spannungen in den resultierenden mehrkomponentigen Seitenwänden zu minimieren. Nach Einschätzung der Erfinder ist es dabei überaus bevorzugt, wenn die steifste vulkanisierbare Kautschukmischung der späteren mehrkomponentigen Seitenwand als Einsatzelement in den Seitenwandgrundrohling eingesetzt und entsprechend erst nachträglich mit der ersten und zweiten vulkanisierbaren Kautschukmischung verbunden wird. Bevorzugt ist demnach ein erfindungsgemäßes Verfahren, wobei der E-Modul der dritten vulkanisierbaren Kautschukmischung um 3 MPa oder mehr, bevorzugt um 7 MPa oder mehr, besonders bevorzugt 10 MPa oder mehr, größer ist als der E-Modul der ersten vulkanisierbaren Kautschukmischung und/oder der zweiten vulkanisierbaren Kautschukmischung, bevorzugt der ersten vulkanisierbaren Kautschukmischung und der zweiten vulkanisierbaren Kautschukmischung.

Aus der bevorzugten Positionierung der Aufnahmeausnehmung an der Grenzfläche der beiden Teilbereiche folgt, dass das Einsatzelement bevorzugt so angeordnet wird, dass es beim Anordnen in der Aufnahmeausnehmung an beide Teilbereiche angrenzt und die dritte vulkanisierbare Kautschukmischung entsprechend mit der ersten und zweiten vulkanisierbaren Kautschukmischung in Kontakt kommt. Hierbei ist es mit Blick auf die Verbundfestigkeit der hergestellten mehrkomponentigen Seitenwand und insbesondere deren Stabilität bei etwaigen Hochschlagoperationen besonders vorteilhaft, wenn zumindest teilweise eine stoffschlüssige Verbindung zwischen den vulkanisierbaren Kautschukmischungen des Seitenwandgrundrohlings und der dritten vulkanisierbaren Kautschukmischung im Einsatzelement erzeugt wird. Anders als in dem aus dem Stand der Technik bekannten Verfahren der Co-Extrusion dieser Komponenten kann dies in vorteilhafterweise durch eine Druckapplikation, d. h. das Andrücken des Einsatzelements in die Aufnahmeausnehmung, erzeugt werden, wobei optional auch der Einsatz von haftvermittelnden Schichten denkbar wäre. Bevorzugt ist ein erfindungsgemäßes Verfahren, wobei das Anordnen des Einsatzelements in der Aufnahmeausnehmung so erfolgt, dass das Einsatzelement den ersten Teilbereich und den zweiten Teilbereich kontaktiert, wobei das Einsatzelement mit den Teilbereichen bevorzugt durch eine zumindest teilweise stoffschlüssige Verbindung der dritten vulkanisierbaren Kautschukmischung mit der ersten vulkanisierbaren Kautschukmischung und der zweiten vulkanisierbaren Kautschukmischung verbunden wird, wobei die stoffschlüssige Verbindung besonders bevorzugt durch Druckapplikation erzeugt oder befördert wird.

Die finale Form der mehrkomponentigen Seitenwand ergibt sich nach Anordnen des Einsatzelements in der Aufnahmeausnehmung. Insoweit ist es für den Fachmann verständlich, dass das Einsatzelement die Aufnahmeausnehmung möglichst vollständig ausfüllen sollte. Umgekehrt ist es jedoch nicht notwendig, dass die Form der Aufnahmeausnehmung mit der Form des Einsatzelements vollständig identisch ist, sodass das Einsatzelement nach der Anordnung in der Aufnahmeausnehmung auch aus dieser herausragen kann. Vorteilhaft ist es nach Einschätzung des Erfinders jedoch, wenn die Form der Aufnahmeausnehmung zumindest teilweise an die Form des aufzunehmenden Einsatzelements angepasst wird, sodass sich eine teilweise formschlüssige Verbindung ergibt, die der mehrkomponentigen Seitenwand bei der Verarbeitung zusätzliche Stabilität verleiht. Bevorzugt ist demnach ein erfindungsgemäßes Verfahren, wobei das Anordnen des Einsatzelements in der Aufnahmeausnehmung so erfolgt, dass die Aufnahmeausnehmung zu mehr als 90 %, bevorzugt zu mehr als 95 %, besonders bevorzugt zu mehr als 98 %, ganz besonders bevorzugt im Wesentlichen zu 100 %, durch das Einsatzelement ausgefüllt wird, und/oder wobei das Anordnen des Einsatzelements in der Aufnahmeausnehmung so erfolgt, dass das Einsatzelement mit dem Seitenwandgrundrohling über eine zumindest teilweise formschlüssige Verbindung verbunden wird.

Der Fachmann versteht, dass es zur Minimierung der auftretenden Spannungen in der mehrkomponentigen Seitenwand sinnvoll ist, die Auswirkungen eines unterschiedlichen Schrumpfes zwischen den Materialien zu minimieren. Entsprechend ist es zielführend, wenn das Anordnen des Einsatzelements in der Aufnahmeausnehmung deutlich nach einer etwaigen Herstellung der einzelnen Komponenten durch Extrusion erfolgt, sodass das Einsatzelement und/oder der Seitenwandgrundrohling eine Temperatur von 50 °C oder weniger, bevorzugt 40 °C oder weniger, besonders bevorzugt 30 °C oder weniger, aufweisen.

Für viele Anwendungen dürfte es zielführend sein, mit dem erfindungsgemäßen Verfahren eine mehrlagige Seitenwand herzustellen und diese als Ganzes in einem Reifenaufbauverfahren einzusetzen. Grundsätzlich ist es jedoch auch möglich, dass das erfindungsgemäße Verfahren in ein Reifenaufbauverfahren integriert wird. Mit Blick auf die typischen Reifenaufbauverfahren kommen dabei vor allem zwei Ausgestaltungen für das Anordnen in Frage. Insbesondere für das Hochschlagen von Seitenwänden mit einer Hochschlagvorrichtung ist es sinnvoll, den Seitenwandgrundrohling zunächst auf der Ausformschulter der Hochschlagvorrichtung zu platzieren und anschließend das Einsatzelement, beispielsweise für das äußere Apexelement, nachträglich einzusetzen. Eine Alternative hierzu, die insbesondere für solche Reifenaufbauverfahren geeignet ist, die ohne Hochschlagvorrichtung auskommen, ist es, zunächst das Einsatzelement zu platzieren, beispielsweise auf einer Reifenaufbautrommel, wo es auf weiteren Lagen des späteren Fahrzeugreifens angeordnet werden kann. Bei diesem Vorgehen wird der Seitenwandgrundrohling anschließend so auf dem Einsatzelement platziert, dass das Einsatzelement in die Aufnahmeausnehmung eingepasst wird. Bevorzugt ist entsprechend ein erfindungsgemäßes Verfahren, wobei das Anordnen des Einsatzelements in der Aufnahmeausnehmung des auf einer Reifenaufbautrommel, bevorzugt einer Hochschlagvorrichtung einer Reifenaufbautrommel, angeordneten Seitenwandgrundrohlings erfolgt, oder wobei das Anordnen des Einsatzelements in der Aufnahmeausnehmung durch Auflegen des Seitenwandgrundrohlings auf das auf einer Reifenaufbautrommel angeordnete Einsatzelement erfolgt.

Auch wenn das erfindungsgemäße Verfahren prinzipiell für eine breite Palette an Geometrien einsetzbar ist, versteht der Fachmann im Bereich der Reifenfertigung zwanglos, dass für die überwiegende Zahl der Fälle ein erfindungsgemäßes Verfahren bevorzugt ist, bei dem die mehrkomponentige Seitenwand, der Seitenwandgrundrohling und auch das Einsatzelement strang- bzw. ringförmig ausgebildet sind, wodurch der Einsatz an der Flanke eines Fahrzeugluftreifens sinnvoll möglich ist.

Offenbart wird abschließend auch eine besonders spannungsfreie mehrkomponentigen Seitenwand, hergestellt oder herstellbar mit dem erfindungsgemäßen Verfahren. Aus den vorstehenden Ausführungen ist für den Fachmann insoweit ersichtlich, dass auch eine mehrkomponentige Seitenwand, welche mit dem erfindungsgemäßen Verfahren hergestellt wird, inhärent vorteilhaft ist, da sie über verringerte Spannungen in der mehrkomponentigen Seitenwand verfügt und deshalb weniger ungewollte Deformationen aufweist, sodass sie insbesondere in automatisierten Verfahren leichter zu verarbeiten ist.

Die Erfindung betrifft abschließend auch ein Verfahren zur Herstellung eines Fahrzeugreifens, umfassend die Verfahrensschritte des erfindungsgemäßen Verfahrens zur Herstellung einer mehrkomponentigen Seitenwand, sowie die Verfahrensschritte:
d) Verbinden der mehrkomponentigen Seitenwand mit weiteren Reifenbauteilen zum Erhalt eines Fahrzeugreifenrohlings, und
e) Vulkanisieren des Fahrzeugreifenrohlings zum Erhalt des Fahrzeugreifens.

Hierbei kann das Vulkanisieren vorteilhafterweise unter den üblichen Bedingungen erfolgen, die dem Fachmann aus dem Stand der Technik umfassend bekannt sind und die er im Zweifelsfall zwangslos auf die Vulkanisationseigenschaften der in den Bauteilen eingesetzten vulkanisierbaren Kautschukmischungen abstimmt.

Das erfindungsgemäße Verfahren zur Herstellung eines Fahrzeugreifens ist besonders vorteilhaft, weil durch den Einsatz der besonders spannungsarmen mehrkomponentigen Seitenwände der vorliegenden Erfindung die Komplexität des Herstellungsverfahrens und die Anfälligkeit für das Auftreten von Materialfehlern, welche aus ungewollten Deformationen der Seitenwände resultieren können, verringert werden. Das entsprechende Verfahren zur Herstellung eines Fahrzeugreifens ist auch deswegen besonders vorteilhaft, weil die einfachere Verarbeitbarkeit der mehrkomponentigen Seitenwände die Anforderung an die Ausbildung der eingesetzten Arbeitskräfte verringert und insbesondere die Umsetzung eines hohen Automatisierungsgrades des Verfahrens erleichtert.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Querschnittsdarstellung eines Seitenwandgrundrohlings und eines Einsatzelements vor dem Anordnen der Komponenten in einem erfindungsgemäßen Verfahren in einer ersten bevorzugten Ausführungsform;
- Fig. 2: eine schematische Querschnittsdarstellung einer mehrkomponentigen Seitenwand, wie sie mit dem Verfahren gemäß Fig. 1 zu erhalten ist;
- Fig. 3: eine schematische Querschnittsdarstellung eines Seitenwandgrundrohlings und eines Einsatzelements vor dem Anordnen der Komponenten in einem erfindungsgemäßen Verfahren in einer zweiten bevorzugten Ausführungsform; und
- Fig. 4: eine schematische Querschnittsdarstellung einer mehrkomponentigen Seitenwand, wie sie mit dem Verfahren gemäß Fig. 3 zu erhalten ist.

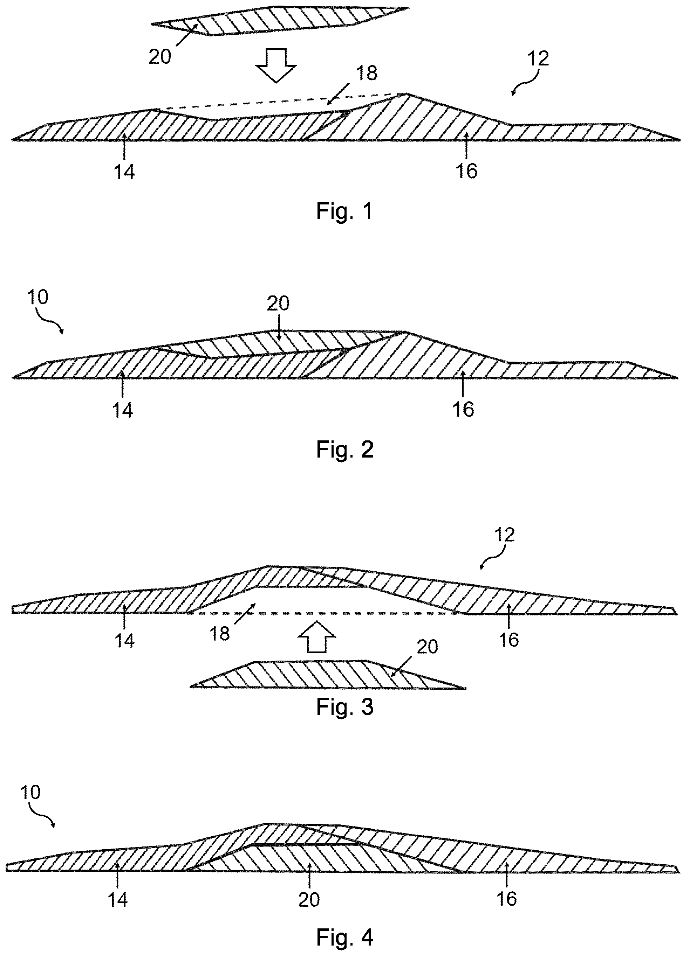

Fig. 1 zeigt eine schematische Darstellung eines Querschnitts durch einen Seitenwandgrundrohling 12 sowie ein Einsatzelement 20 unmittelbar vor dem Anordnen der beiden Komponenten gemäß Verfahrensschritt c) des erfindungsgemäßen Verfahrens in einer ersten bevorzugten Ausführungsform.

Der Seitenwandgrundrohling 12 besteht aus einem ersten Teilbereich 14 und einem zweiten Teilbereich 16, die jeweils im Wesentlichen vollständig aus einer ersten vulkanisierbaren Kautschukmischung bzw. einer zweiten vulkanisierbaren Kautschukmischung bestehen. Der dargestellte Seitenwandgrundrohling 12 wurde durch Co-Extrusion der ersten und zweiten vulkanisierbaren Kautschukmischung erhalten, sodass der erste Teilbereich 14 und der zweite Teilbereich 16 an der Verbindungsfläche stoffschlüssig miteinander verbunden sind.

Der Seitenwandgrundrohling 12 weist eine Aufnahmeausnehmung 18 auf, die vorliegend durch eine gestrichelte Linie kenntlich gemacht ist und teilweise im ersten Teilbereich 14 und teilweise im zweiten Teilbereich 16 liegt, sodass die Anordnung des Einsatzelements 20 in der Aufnahmeausnehmung 18 zu einem Kontakt des Einsatzelements 20 mit dem ersten Teilbereich 14 und dem zweiten Teilbereich 16 führt. Durch diese Anordnung liegt die Aufnahmeausnehmung 18 im Zentralbereich des Seitenwandgrundrohlings 12 und weist eine maximale Tiefe auf, die etwa 33 % der maximalen Dicke des Seitenwandgrundrohlings 12 entspricht.

In dem gezeigten Beispiel der Fig. 1 weisen der erste Teilbereich 14 und der zweite Teilbereich 16 im strangförmigen Seitenwandgrundrohling 12 in etwa das gleiche Volumen auf. Der erste Teilbereich 14 umfasst dabei mit der ersten vulkanisierbaren Kautschukmischung eine Kautschukmischung, deren E-Modul um mehr als 6 MPa größer ist als der E-Modul der zweiten vulkanisierbaren Kautschukmischung, sodass der erste Teilbereich 14 vorliegend als "rim strip" ausgeführt ist.

Das dargestellte Einsatzelement 20 wurde im gezeigten Beispiel der Fig. 1 ebenfalls durch Extrusion hergestellt und besteht im Wesentlichen vollständig aus der dritten vulkanisierbaren Kautschukmischung, deren E-Modul um mehr als 10 MPa über dem E-Modul der ersten vulkanisierbaren Kautschukmischung liegt, sodass es sich bei dem Einsatzelement 20 um ein Element hantelt, welches als äußeres Apexelement fungieren kann.

In dem erfindungsgemäßen Verfahren wird das Einsatzelement 20 in der Aufnahmeausnehmung 18 angeordnet, was in Fig. 1 durch den Pfeil angedeutet wird. Die hieraus resultierende mehrkomponentige Seitenwand 10 ist in Fig. 2 dargestellt. Ausgehend von dem in Fig. 1 offenbarten Aufbau umfasst die mehrkomponentige Seitenwand 10 nunmehr drei verschiedene Komponenten. Hierbei wurde die Aufnahmeausnehmung 18 vollständig durch das Einsatzelement 20 ausgefüllt, welches bedingt durch die komplementäre Form des Einsatzelements 20 und der Aufnahmeausnehmung 18 formschlüssig mit dem Seitenwandgrundrohling 12 verbunden wurde. Zudem wird durch leichte Druckapplikation auf das Einsatzelement 20 eine stoffschlüssige Verbindung zwischen der dritten vulkanisierbaren Kautschukmischung und den beiden anderen vulkanisierbaren Kautschukmischungen erreicht.

Die Fig. 1 und 2 zeigen ein erfindungsgemäßes Verfahren, wie es beispielsweise im Rahmen eines Verfahrens zur Herstellung eines Fahrzeugreifens mit einer Hochschlagvorrichtung durchgeführt werden kann, bei dem die Komponenten beispielsweise auf einem Bombierbalg angeordnet werden.

Bei ansonsten gleichen Parametern zeigen die Fig. 3 und 4 im Gegensatz hierzu eine Ausführung des erfindungsgemäßen Verfahrens, bei dem das Anordnen des Einsatzelements 20 in der Aufnahmeausnehmung 18 dadurch erfolgt, dass der Seitenwandgrundrohling 12 von oben auf das Einsatzelement 20 abgesenkt wird, wobei das Einsatzelement 20 hierdurch in die Aufnahmeausnehmung 18 eingefasst wird.

### Bezugszeichenliste

- 10: Mehrkomponentige Seitenwand
- 12: Seitenwandgrundrohling
- 14: Erster Teilbereich
- 16: Zweiter Teilbereich
- 18: Aufnahmeausnehmung
- 20: Einsatzelement

## Patentansprüche

1. Verfahren zur Herstellung einer mehrkomponentigen Seitenwand (10) für die Verwendung in Fahrzeugreifen, umfassend die Verfahrensschritte:
a) Herstellen oder Bereitstellen eines mehrkomponentigen Seitenwandgrundrohlings (12), wobei der Seitenwandgrundrohling (12) einen ersten Teilbereich (14), umfassend eine erste vulkanisierbare Kautschukmischung, und einen zweiten Teilbereich (16), umfassend eine zweite vulkanisierbare Kautschukmischung, umfasst, wobei der Seitenwandgrundrohling (12) zumindest eine Aufnahmeausnehmung (18) aufweist, **gekennzeichnet durch**
b) Herstellen oder Bereitstellen eines Einsatzelements (20), umfassend eine dritte vulkanisierbare Kautschukmischung, und
c) Anordnen des Einsatzelements (20) in der Aufnahmeausnehmung (18) des Seitenwandgrundrohlings (12) zur Herstellung der mehrkomponentigen Seitenwand (10).

2. Verfahren nach Anspruch 1, wobei der Seitenwandgrundrohling (12) hergestellt wird, wobei das Herstellen durch Co-Extrusion der ersten vulkanisierbaren Kautschukmischung und der zweiten vulkanisierbaren Kautschukmischung erfolgt.

3. Verfahren nach einem der Ansprüche 1 oder 2, wobei die erste vulkanisierbare Kautschukmischung und die zweite vulkanisierbare Kautschukmischung einen unterschiedlichen E-Modul aufweisen, wobei sich der E-Modul bevorzugt um 2 MPa oder mehr, besonders bevorzugt um 4 MPa oder mehr, ganz besonders bevorzugt um 6 MPa oder mehr, unterscheidet.

4. Verfahren nach einem der Ansprüche 1 bis 3, wobei die Aufnahmeausnehmung (18) eine maximale Tiefe im Bereich von 0,3*d bis 0,7*d, bevorzugt im Bereich von 0,4*d bis 0,6*d, besonders bevorzugt im Bereich von 0,45*d bis 0,55*d, aufweist, wobei d die maximale Dicke des Seitenwandgrundrohlings (12) ist.

5. Verfahren nach einem der Ansprüche 1 bis 4, wobei der Volumenanteil des Einsatzelements (20) im Bereich von 10 % bis 50 %, bevorzugt im Bereich von 20 % bis 40 %, besonders bevorzugt im Bereich von 25 % bis 35 %, liegt, bezogen auf das Volumen der mehrkomponentigen Seitenwand (12).

6. Verfahren nach einem der Ansprüche 1 bis 5, wobei der E-Modul der dritten vulkanisierbaren Kautschukmischung um 3 MPa oder mehr, bevorzugt um 7 MPa oder mehr, besonders bevorzugt 10 MPa oder mehr, größer ist als der E-Modul der ersten vulkanisierbaren Kautschukmischung und/oder der zweiten vulkanisierbaren Kautschukmischung, bevorzugt der ersten vulkanisierbaren Kautschukmischung und der zweiten vulkanisierbaren Kautschukmischung.

7. Verfahren nach einem der Ansprüche 1 bis 6, wobei das Anordnen des Einsatzelements (20) in der Aufnahmeausnehmung (18) so erfolgt, dass das Einsatzelement (20) den ersten Teilbereich (14) und den zweiten Teilbereich (16) kontaktiert, wobei das Einsatzelement (20) mit den Teilbereichen bevorzugt durch eine zumindest teilweise stoffschlüssige Verbindung der dritten vulkanisierbaren Kautschukmischung mit der ersten vulkanisierbaren Kautschukmischung und der zweiten vulkanisierbaren Kautschukmischung verbunden wird, wobei die stoffschlüssige Verbindung besonders bevorzugt durch Druckapplikation erzeugt oder befördert wird.

8. Verfahren nach einem der Ansprüche 1 bis 7, wobei das Anordnen des Einsatzelements (20) in der Aufnahmeausnehmung (18) so erfolgt, dass das Einsatzelement (20) mit dem Seitenwandgrundrohling (12) über eine zumindest teilweise formschlüssige Verbindung verbunden wird.

9. Verfahren nach einem der Ansprüche 1 bis 8, wobei das Anordnen des Einsatzelements (20) in der Aufnahmeausnehmung (18) des auf einer Reifenaufbautrommel, bevorzugt einer Hochschlagvorrichtung einer Reifenaufbautrommel, angeordneten Seitenwandgrundrohlings (12) erfolgt, oder wobei das Anordnen des Einsatzelements (20) in der Aufnahmeausnehmung (18) durch Auflegen des Seitenwandgrundrohlings (12) auf das auf einer Reifenaufbautrommel angeordnete Einsatzelement (20) erfolgt.

10. Verfahren zur Herstellung eines Fahrzeugreifens, umfassend die Verfahrensschritte des Verfahrens zur Herstellung einer mehrkomponentigen Seitenwand (10) nach einem der Ansprüche 1 bis 9, sowie die Verfahrensschritte:
d) Verbinden der mehrkomponentigen Seitenwand (10) mit weiteren Reifenbauteilen zum Erhalt eines Fahrzeugreifenrohlings, und
e) Vulkanisieren des Fahrzeugreifenrohlings zum Erhalt des Fahrzeugreifens.

## Claims

1. Method for producing a multi-component sidewall (10) for use in vehicle tyres, comprising the method steps of:
a) producing or providing a multi-component sidewall preform (12), wherein the sidewall preform (12) comprises a first partial region (14), comprising a first vulcanizable rubber compound, and a second partial region (16), comprising a second vulcanizable rubber compound, wherein the sidewall preform (12) has at least one receiving recess (18), **characterized by**
b) producing or providing an insert element (20), comprising a third vulcanizable rubber compound, and
c) arranging the insert element (20) in the receiving recess (18) of the sidewall preform (12) to produce the multi-component sidewall (10).

2. Method according to Claim 1, wherein the sidewall preform (12) is produced, wherein the production is effected by coextrusion of the first vulcanizable rubber compound and the second vulcanizable rubber compound.

3. Method according to either of Claims 1 and 2, wherein the first vulcanizable rubber compound and the second vulcanizable rubber compound have different moduli of elasticity, wherein the moduli of elasticity differ preferably by 2 MPa or more, particularly preferably by 4 MPa or more, very particularly preferably by 6 MPa or more.

4. Method according to one of Claims 1 to 3, wherein the receiving recess (18) has a maximum depth ranging from 0.3*d to 0.7*d, preferably ranging from 0.4*d to 0.6*d, particularly preferably ranging from 0.45*d to 0.55*d, wherein d is the maximum thickness of the sidewall preform (12).

5. Method according to one of Claims 1 to 4, wherein the proportion of the insert element (20) by volume in relation to the volume of the multi-component sidewall (12) ranges from 10% to 50%, preferably ranges from 20% to 40%, particularly preferably ranges from 25% to 35%.

6. Method according to one of Claims 1 to 5, wherein the modulus of elasticity of the third vulcanizable rubber compound is 3 MPa or more, preferably 7 MPa or more, particularly preferably 10 MPa or more, greater than the modulus of elasticity of the first vulcanizable rubber compound and/or of the second vulcanizable rubber compound, preferably of the first vulcanizable rubber compound and of the second vulcanizable rubber compound.

7. Method according to one of Claims 1 to 6, wherein the insert element (20) is arranged in the receiving recess (18) such that the insert element (20) contacts the first partial region (14) and the second partial region (16), wherein the insert element (20) is connected to the partial regions preferably by an at least partially integral bond of the third vulcanizable rubber compound to the first vulcanizable rubber compound and the second vulcanizable rubber compound, wherein the integral bond is created or promoted particularly preferably by application of pressure.

8. Method according to one of Claims 1 to 7, wherein the insert element (20) is arranged in the receiving recess (18) such that the insert element (20) is connected to the sidewall preform (12) via an at least partially form-fitting connection.

9. Method according to one of Claims 1 to 8, wherein the insert element (20) is arranged in the receiving recess (18) of the sidewall preform (12) arranged on a tyre building drum, preferably on a turn-up device of a tyre building drum, or wherein the insert element (20) is arranged in the receiving recess (18) by laying the sidewall preform (12) onto the insert element (20) arranged on a tyre building drum.

10. Method for producing a vehicle tyre, comprising the method steps of the method for producing a multi-component sidewall (10) according to one of Claims 1 to 9, and also the method steps of:
d) connecting the multi-component sidewall (10) to further tyre components to obtain a green vehicle tyre, and
e) vulcanizing the green vehicle tyre to obtain the vehicle tyre.

## Revendications

1. Procédé de fabrication d'une paroi latérale à plusieurs composants (10) destinée à être utilisée dans des pneus de véhicule, comprenant les étapes de procédé suivantes :
a) la fabrication ou la fourniture d'une ébauche de base de paroi latérale à plusieurs composants (12), l'ébauche de base de paroi latérale (12) comprenant une première zone partielle (14) comprenant un premier mélange de caoutchouc vulcanisable et une deuxième zone partielle (16) comprenant un deuxième mélange de caoutchouc vulcanisable, l'ébauche de base de paroi latérale (12) présentant au moins un évidement de réception (18), **caractérisé par**
b) la fabrication ou la fourniture d'un élément d'insertion (20) comprenant un troisième mélange de caoutchouc vulcanisable, et
c) l'agencement de l'élément d'insertion (20) dans l'évidement de réception (18) de l'ébauche de base de paroi latérale (12) pour fabriquer la paroi latérale à plusieurs composants (10).

2. Procédé selon la revendication 1, dans lequel l'ébauche de base de paroi latérale (12) est fabriquée, la fabrication étant effectuée par coextrusion du premier mélange de caoutchouc vulcanisable et du deuxième mélange de caoutchouc vulcanisable.

3. Procédé selon l'une quelconque des revendications 1 ou 2, dans lequel le premier mélange de caoutchouc vulcanisable et le deuxième mélange de caoutchouc vulcanisable présentent un module d'élasticité différent, le module d'élasticité différant de préférence de 2 MPa ou plus, de manière particulièrement préférée de 4 MPa ou plus, de manière tout particulièrement préférée de 6 MPa ou plus.

4. Procédé selon l'une quelconque des revendications 1 à 3, dans lequel l'évidement de réception (18) présente une profondeur maximale dans la plage de 0,3*d à 0,7*d, de préférence dans la plage de 0,4*d à 0,6*d, de manière particulièrement préférée dans la plage de 0,45*d à 0,55*d, d étant l'épaisseur maximale de l'ébauche de base de paroi latérale (12).

5. Procédé selon l'une quelconque des revendications 1 à 4, dans lequel la fraction volumique de l'élément d'insertion (20) se situe dans la plage de 10 % à 50 %, de préférence dans la plage de 20 % à 40 %, de manière particulièrement préférée dans la plage de 25 % à 35 %, par rapport au volume de la paroi latérale à plusieurs composants (12).

6. Procédé selon l'une quelconque des revendications 1 à 5, dans lequel le module d'élasticité du troisième mélange de caoutchouc vulcanisable est supérieur de 3 MPa ou plus, de préférence de 7 MPa ou plus, de manière particulièrement préférée de 10 MPa ou plus, au module d'élasticité du premier mélange de caoutchouc vulcanisable et/ou du deuxième mélange de caoutchouc vulcanisable, de préférence du premier mélange de caoutchouc vulcanisable et du deuxième mélange de caoutchouc vulcanisable.

7. Procédé selon l'une quelconque des revendications 1 à 6, dans lequel l'agencement de l'élément d'insertion (20) dans l'évidement de réception (18) est effectué de telle sorte que l'élément d'insertion (20) soit en contact avec la première zone partielle (14) et la deuxième zone partielle (16), l'élément d'insertion (20) étant relié aux zones partielles de préférence par une liaison par matière au moins partielle du troisième mélange de caoutchouc vulcanisable avec le premier mélange de caoutchouc vulcanisable et le deuxième mélange de caoutchouc vulcanisable, la liaison par matière étant créée ou favorisée de manière particulièrement préférée par application de pression.

8. Procédé selon l'une quelconque des revendications 1 à 7, dans lequel l'agencement de l'élément d'insertion (20) dans l'évidement de réception (18) est effectué de telle sorte que l'élément d'insertion (20) est relié à l'ébauche de base de paroi latérale (12) par une liaison au moins partiellement par complémentarité de forme.

9. Procédé selon l'une quelconque des revendications 1 à 8, dans lequel l'agencement de l'élément d'insertion (20) est effectué dans l'évidement de réception (18) de l'ébauche de base de paroi latérale (12) agencée sur un tambour de confection de pneus, de préférence un dispositif de battage vertical d'un tambour de confection de pneus, ou dans lequel l'agencement de l'élément d'insertion (20) dans l'évidement de réception (18) est effectué en posant l'ébauche de base de paroi latérale (12) sur l'élément d'insertion (20) agencé sur un tambour de confection de pneus.

10. Procédé de fabrication d'un pneu de véhicule, comprenant les étapes de procédé du procédé de fabrication d'une paroi latérale à plusieurs composants (10) selon l'une quelconque des revendications 1 à 9, ainsi que les étapes de procédé suivantes :
d) la liaison de la paroi latérale à plusieurs composants (10) à d'autres composants de pneu pour obtenir une ébauche de pneu de véhicule, et
e) la vulcanisation de l'ébauche de pneu de véhicule pour obtenir le pneu de véhicule.
